# EUROPÄISCHE PATENTSCHRIFT

(11) **EP 4 337 486 B1**
(45) Veröffentlichungstag und Bekanntmachung des Hinweises auf die Patenterteilung: **19.03.2025**
(21) Anmeldenummer: 22728522.8
(22) Anmeldetag: 10.05.2022
(51) Int. Cl.: B60K 26/02, B62K 23/04, B62K 11/14, B62J 45/40

(54) **VERFAHREN ZUM ERKENNEN EINER EINGESCHRÄNKTEN BEWEGLICHKEIT EINES GASGRIFFS FÜR EIN MOTORRAD, STEUERGERÄT UND MOTORRADSYSTEM**
METHOD FOR DETECTING LIMITED MOVABILITY OF A THROTTLE GRIP FOR A MOTORCYCLE, CONTROL UNIT AND MOTORCYCLE SYSTEM
PROCÉDÉ DE DÉTECTION D'UNE MOBILITÉ LIMITÉE D'UNE MANETTE DES GAZ POUR MOTOCYCLETTE, APPAREIL DE COMMANDE ET SYSTÈME DE MOTOCYCLETTE

(30) Priorität: 12.05.2021 DE 102021112456
(43) Veröffentlichungstag der Anmeldung: 20.03.2024
(73) Patentinhaber: Robert Bosch GmbH, 70442 Stuttgart (DE)
(72) Erfinder: WINDMUELLER, Andreas, 71679 Asperg (DE); MUELLER, Danny, 75428 Illingen (DE); AHLGRIMM, Sven, 74388 Talheim (DE)
(86) Internationale Anmeldenummer: PCT/EP2022/062615
(87) Internationale Veröffentlichungsnummer: WO 2022/238390

(56) Entgegenhaltungen:
- EP-A1- 1 647 808
- EP-A1- 2 716 891
- WO-A1-2006/005458
- KR-A- 20190 116 499

## Beschreibung

### Gebiet der Erfindung

Die Erfindung betrifft ein Verfahren zum Erkennen einer eingeschränkten Beweglichkeit eines Gasgriffs für ein Motorrad. Des Weiteren betrifft die Erfindung ein Steuergerät, ein Computerprogramm und ein computerlesbares Medium zum Ausführen eines solchen Verfahrens sowie ein Motorradsystem, das mit einem solchen Steuergerät ausgestattet ist.

### Stand der Technik

Ein Gasgriff eines Motorrads kann durch starke mechanische Beanspruchung, beispielsweise wenn das Motorrad seitlich umkippt, so beschädigt werden, dass er in seiner Beweglichkeit eingeschränkt ist. Beispielsweise kann der Gasgriff mit einer Rückstellfeder ausgestattet sein, die bewirkt, dass er beim Loslassen von allein in seine Ausgangsposition zurückkehrt. Diese Rückstellfeder kann infolge äußerer Einwirkungen brechen und in ungünstigen Fällen dazu führen, dass sich der Gasgriff nur noch schwer drehen lässt oder sogar klemmt.

Eine aktuelle Position des Gasgriffs kann beispielsweise mittels eines zweikanaligen Gasgriffsensors erfasst und durch Vergleichen der Sensorsignale beider Kanäle plausibilisiert werden.

Stand der Technik ist EP 1 647 808 A1, und offenbart die folgenden Merkmale des Anspruchs 1; einen Gasgriff und ein Verfahren zur Überprüfen der Drehwinkelsensoren des Gasgriffs.

### Offenbarung der Erfindung

Vor diesem Hintergrund werden mit dem hier vorgestellten Ansatz ein Verfahren zum Erkennen einer eingeschränkten Beweglichkeit eines Gasgriffs für ein Motorrad, ein entsprechendes Steuergerät, ein entsprechendes Motorradsystem, ein entsprechendes Computerprogramm und ein entsprechendes computerlesbares Medium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung ermöglichen es, einen Gasgriff eines Motorrads automatisch auf seine Beweglichkeit hin zu überprüfen. Somit kann eine eingeschränkte Beweglichkeit des Gasgriffs, etwa infolge einer übermäßigen Beanspruchung, frühzeitig erkannt werden. Beispielsweise können in diesem Fall automatisch entsprechende Sicherheitsmaßnahmen ergriffen werden. Damit kann das Risiko von Unfällen reduziert werden.

Ein erster Aspekt der Erfindung betrifft ein computerimplementiertes Verfahren zum Erkennen einer eingeschränkten Beweglichkeit eines Gasgriffs für ein Motorrad. Das Verfahren umfasst zumindest die folgenden Schritte: Erzeugen eines Steuersignals zum Ansteuern eines Gasgriffaktors zum Verstellen des Gasgriffs; Empfangen von durch eine Gasgriffsensorik als Reaktion auf das Ansteuern des Gasgriffaktors erzeugten Sensordaten, die eine Auslenkung des Gasgriffs aus einer Ausgangsposition und/oder eine auf den Gasgriff aufgebrachte Kraft anzeigen; und Erkennen der eingeschränkten Beweglichkeit durch Auswerten der Sensordaten.

Das Verfahren kann automatisch durch einen Prozessor, etwa eines Steuergeräts des Motorrads, ausgeführt werden.

Unter einem Motorrad kann im Allgemeinen ein einspuriges Fahrzeug mit einem Antriebsmotor in Form eines Verbrennungs- und/oder Elektromotors verstanden werden. Bei dem Motorrad kann es sich auch um einen Elektroroller oder ein Elektrofahrrad handeln. Das Motorrad kann aber auch ein motorradähnliches zweispuriges Fahrzeug, auch Quad genannt, oder ein Wassermotorrad, auch Jetski genannt, sein.

Unter einem Gasgriff ist ein vom Fahrer des Motorrads betätigbares Bedienelement verstanden, durch dessen Betätigung die Geschwindigkeit des Motorrads gesteuert wird. Der Gasgriff ist als Drehgriff ausgeführt.

Die Gasgriffsensorik kann einen oder mehrere Sensoren umfassen. Beispielsweise kann die Gasgriffsensorik einen ersten Sensor zum Erfassen der Auslenkung des Gasgriffs, beispielsweise dessen Drehwinkels, und einen zweiten Sensor zum Erfassen der auf den Gasgriff aufgebrachten Kraft, beispielsweise eines auf den Gasgriff aufgebrachten Drehmoments, umfassen.

Die Sensordaten können zumindest die Auslenkung und/oder die Kraft anzeigen, die durch die Gasgriffsensorik während des Ansteuerns des Gasgriffaktors gemessen werden.

Der Gasgriffaktor kann beispielsweise als Elektromotor oder elektromechanischer Aktor ausgeführt sein. Der Gasgriffaktor kann konfiguriert sein, um den Gasgriff in einer Richtung oder in entgegengesetzten Richtungen zu verstellen. Mit anderen Worten können mittels des Gasgriffaktors gleich oder entgegengesetzt gerichtete Verstellkräfte auf den Gasgriff aufgebracht werden. Der Gasgriffaktor kann ferner konfiguriert sein, um den Gasgriff über dessen gesamten möglichen Verstellbereich oder auch nur innerhalb eines bestimmten Teils dessen möglichen Verstellbereichs zu verstellen. Der Gasgriffaktor kann mechanisch mit dem Gasgriff gekoppelt sein.

Es ist möglich, dass der Gasgriffaktor zusätzlich als Sensor zum Erfassen der Auslenkung und/oder Kraft fungiert.

Das Steuersignal kann beispielsweise so erzeugt werden, dass der Gasgriff mittels des Gasgriffaktors mit mehreren aufeinanderfolgenden Kraftstößen, d. h. mit einem Kraftpuls, beaufschlagt wird, deren Frequenz und/oder Intensität so gewählt sein kann, dass sie vom Fahrer nicht oder zumindest nicht störend wahrgenommen werden. Anhand der mittels der Gasgriffsensorik gemessenen Auslenkungs- und/oder Kraftwerte kann dann beispielsweise eine Dämpfung der Kraftstöße erkannt werden, die einen Rückschluss darauf ermöglicht, ob der Gasgriff von einer Hand des Fahrers gehalten wird oder nicht.

Beim Auswerten der Sensordaten kann beispielsweise bestimmt werden, wie weit der Gasgriff beim Aufbringen einer bestimmten Verstellkraft auf den Gasgriff mittels des Gasgriffaktors ausgelenkt wird und/oder wie groß eine der Verstellkraft entgegenwirkende Gegenkraft ist. Beispielsweise können die durch die Gasgriffsensorik gemessene Auslenkung und/oder Kraft mit entsprechenden Schwellenwerten verglichen werden, wobei die eingeschränkte Beweglichkeit in Abhängigkeit von den Vergleichsergebnissen erkannt werden kann.

Es ist möglich, dass zum Erkennen der eingeschränkten Beweglichkeit des Gasgriffs die Sensordaten unter Verwendung des Steuersignals ausgewertet werden.

Durch das hier und nachstehend beschriebene Verfahren kann die Gefahr von Verletzungen und Unfällen durch klemmende Gasgriffe reduziert werden. Dies trifft insbesondere für Motorräder im öffentlichen Flottenbetrieb zu, da solche Motorräder in der Regel auch von ungeübten Fahrern genutzt und stark beansprucht werden, beispielsweise durch häufiges seitliches Umkippen.

Ein zweiter Aspekt der Erfindung betrifft ein Steuergerät. Das Steuergerät umfasst einen Prozessor, der konfiguriert ist, um das Verfahren gemäß einer Ausführungsform des ersten Aspekts der Erfindung auszuführen. Merkmale des Verfahrens gemäß einer Ausführungsform des ersten Aspekts der Erfindung können auch Merkmale des Steuergeräts sein und umgekehrt.

Das Steuergerät kann Hardware- und/oder Softwaremodule umfassen. Zusätzlich zum Prozessor kann das Steuergerät einen Speicher und Datenkommunikationsschnittstellen zur Datenkommunikation mit Peripheriegeräten umfassen.

Ein dritter Aspekt der Erfindung betrifft ein Motorradsystem. Das Motorradsystem umfasst einen Gasgriffaktor zum Verstellen eines Gasgriffs für ein Motorrad, eine Gasgriffsensorik zum Messen einer Auslenkung des Gasgriffs aus einer Ausgangsposition und/oder einer auf den Gasgriff aufgebrachten Kraft sowie ein Steuergerät gemäß einer Ausführungsform des zweiten Aspekts der Erfindung.

Ein vierter Aspekt der Erfindung betrifft ein Computerprogramm. Das Computerprogramm umfasst Befehle, die einen Prozessor bei Ausführung des Computerprogramms durch den Prozessor veranlassen, das Verfahren gemäß einer Ausführungsform des ersten Aspekts der Erfindung auszuführen.

Ein fünfter Aspekt der Erfindung betrifft ein computerlesbares Medium, auf dem das Computerprogramm gemäß einer Ausführungsform des vierten Aspekts der Erfindung gespeichert ist. Das computerlesbare Medium kann ein flüchtiger oder nicht flüchtiger Datenspeicher sein. Beispielsweise kann das computerlesbare Medium eine Festplatte, ein USB-Speichergerät, ein RAM, ROM, EPROM oder Flash-Speicher sein. Das computerlesbare Medium kann auch ein einen Download eines Programmcodes ermöglichendes Datenkommunikationsnetzwerk wie etwa das Internet oder eine Datenwolke (Cloud) sein.

Merkmale des Verfahrens gemäß einer Ausführungsform des ersten Aspekts der Erfindung können auch Merkmale des Computerprogramms und/oder des computerlesbaren Mediums sein und umgekehrt.

Ideen zu Ausführungsformen der vorliegenden Erfindung können unter anderem als auf den nachfolgend beschriebenen Gedanken und Erkenntnissen beruhend angesehen werden.

Gemäß einer Ausführungsform kann eine Haltekraft, mit der der Gasgriff von einem Fahrer gehalten wird, aus den Sensordaten bestimmt werden. Dabei kann die eingeschränkte Beweglichkeit unter Berücksichtigung der Haltekraft erkannt werden. Mit anderen Worten kann erkannt werden, ob der Gasgriff aufgrund einer gewünschten Einwirkung des Fahrers oder aufgrund einer unerwünschten eingeschränkten Beweglichkeit des Gasgriffs in seiner aktuellen Position gehalten wird. Wenn der Gasgriff nicht vom Fahrer gehalten wird und gleichzeitig aus der Ausgangsposition ausgelenkt ist, ist mit großer Wahrscheinlichkeit davon auszugehen, dass der Gasgriff beschädigt ist, sofern der Gasgriff beispielsweise nicht absichtlich durch eine mechanische Feststellvorrichtung in seiner aktuellen Position gehalten wird.

Gemäß einer Ausführungsform kann die eingeschränkte Beweglichkeit dann erkannt werden, wenn die Haltekraft kleiner als ein Schwellenwert ist und der Gasgriff ausgelenkt ist. Dadurch kann die eingeschränkte Beweglichkeit effizient und zuverlässig erkannt werden.

Gemäß einer Ausführungsform kann das Steuersignal erzeugt werden, um den Gasgriff abwechselnd in entgegengesetzten Richtungen zu verstellen. Dies ermöglicht es beispielsweise, den Gasgriff im Stillstand des Motorrads, d. h., wenn der Gasgriff gerade nicht vom Fahrer gehalten wird, ausgehend von seiner Ausgangsposition bis zu einer Zielposition, beispielsweise bis zu einem Endanschlag, und von dort zurück zur Ausgangsposition zu bewegen. Dabei kann festgestellt werden, ob der Gasgriff schwergängig ist oder klemmt. Der Gasgriffaktor kann aber auch während der Fahrt des Motorrads so angesteuert werden, dass der Gasgriff in entgegengesetzten Richtungen mit einer Verstellkraft beaufschlagt wird.

Gemäß einer Ausführungsform kann das Verfahren ferner folgende Schritte umfassen: Umsetzen der Auslenkung in ein gewünschtes Drehmoment zum Steuern eines Antriebs und/oder einer Bremse des Motorrads; wenn die eingeschränkte Beweglichkeit erkannt wurde: Verwenden eines vorgegebenen Drehmoments statt des gewünschten Drehmoments zum Steuern des Antriebs und/oder der Bremse. Wenn die eingeschränkte Beweglichkeit nicht erkannt wurde, kann hingegen das gewünschte Drehmoment statt des vorgegebenen Drehmoments zum Steuern des Antriebs und/oder der Bremse verwendet werden. Das vorgegebene Drehmoment kann konstant oder variierbar sein. Beispielsweise kann das vorgegebene Drehmoment so gewählt sein, dass das Motorrad bis zum Stillstand abgebremst und/oder im Stillstand gehalten wird. Das vorgegebene Drehmoment kann auch einfach null sein. Somit kann das Risiko von Unfällen im Fall eines klemmenden oder schwergängigen Gasgriffs reduziert werden.

Beispielsweise kann durch Einprägung eines Drehmomentpulses auf den Gasgriff und durch Messung einer resultierenden mechanischen Bewegung des Gasgriffs und des aufgebrachten Drehmoments erkannt werden, ob sich die Hand des Fahrers am Gasgriff befindet. Diese Ausführungsform eignet sich für Situationen, in denen sich der Gasgriff für längere Zeit konstant in einer Position außerhalb seiner Ausgangsposition oder Nullstellung befindet.

Wird feststellt, dass sich die Hand des Fahrers nicht am Gasgriff befindet und sich der Gasgriff in einer Position außerhalb seiner Ausgangsposition befindet, so kann beispielsweise nach Ablauf einer einstellbaren Filterzeit die eingeschränkte Beweglichkeit des Gasgriffs erkannt werden. Als Reaktion darauf kann beispielsweise ein aus den Sensordaten, genauer aus der gemessenen Auslenkung des Gasgriffs, abgeleitetes Fahrerwunschmoment auf null oder einen sonstigen geeigneten Alternativwert gesetzt werden.

Gemäß einer Ausführungsform kann das Steuersignal während der Fahrt des Motorrads erzeugt werden. Beispielsweise kann der Gasgriff während der Fahrt des Motorrads mittels des Gasgriffaktors in Vibrationen versetzt werden, um festzustellen, ob der Gasgriff klemmt oder schwergängig ist. Somit kann die Beweglichkeit des Gasgriffs kontinuierlich überwacht werden.

Denkbar ist beispielsweise, dass über eine während der Fahrt ausgeführte "Zupf"-Funktion Drehmomentpulse mittels des Gasgriffaktors auf den Gasgriff aufgebracht werden und anhand dieser Drehmomentpulse, etwa anhand deren Dämpfung, eine Verklemmung oder Schwergängigkeit des Gasgriffs erkannt wird, ähnlich der in manchen Kraftfahrzeugen realisierten Funktion der Erkennung, ob der Fahrer die Hände am Lenkrad hat.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Motorrad, das mit einem Motorradsystem gemäß einem Ausführungsbeispiel der Erfindung ausgestattet ist.
Fig. 2 zeigt ein Flussdiagramm eines Verfahrens gemäß einem Ausführungsbeispiel der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

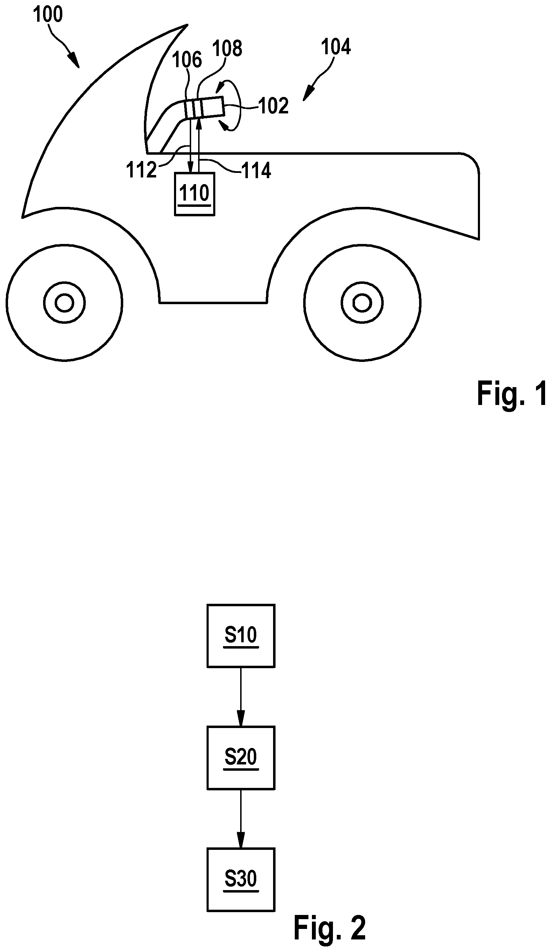

Fig. 1 zeigt ein Motorrad 100 mit einem Gasgriff 102 in Form eines Drehgriffs. Das Motorrad 100 ist mit einem Motorradsystem 104 ausgestattet, das eine Gasgriffsensorik 106 zum Messen einer Auslenkung des Gasgriffs 102 aus dessen Ausgangsposition, einen mit dem Gasgriff 102 mechanisch gekoppelten Gasgriffaktor 108 in Form eines elektrisch ansteuerbaren Stellmotors zum Beaufschlagen des Gasgriffs 102 mit einem Drehmoment sowie ein Steuergerät 110 zum Auswerten von durch die Gasgriffsensorik 106 bereitgestellten Sensordaten 112 und zum Ansteuern des Gasgriffaktors 108 durch Erzeugen und Ausgeben eines entsprechenden Steuersignals 114 umfasst.

Die Gasgriffsensorik 106 kann einen oder mehrere Sensoren umfassen. Beispielsweise kann die Gasgriffsensorik 106 ein Potentiometer zum Messen der aktuellen Auslenkung des Gasgriffs 102, d. h. dessen aktuellen Drehwinkels, umfassen. Zusätzlich kann die Gasgriffsensorik 106 einen Drehmomentsensor zum Messen des auf den Gasgriff 102 aufgebrachten Drehmoments umfassen.

Mithilfe des Motorradsystems 104 kann eine eingeschränkte Beweglichkeit des Gasgriffs 102 erkannt werden. Ein entsprechendes Verfahren ist in Fig. 2 dargestellt. Dieses kann im Stillstand oder auch während der Fahrt des Motorrads 100 durch Ausführen eines entsprechenden Computerprogramms durch einen Prozessor des Steuergeräts 110 ausgeführt werden.

Hierzu wird in einem Schritt S10 zunächst das Steuersignal 114 erzeugt, wodurch der Gasgriff 102 mittels des Gasgriffaktors 108 mit einem bestimmten Drehmoment beaufschlagt wird, gegebenenfalls zusätzlich zu einem vom Fahrer beim Halten des Gasgriffs 102 aufgebrachten Haltemoment.

In einem Schritt S20 misst die Gasgriffsensorik 106 die resultierende Auslenkung des Gasgriffs 102 und/oder das resultierende aufgebrachte Drehmoment und gibt die entsprechenden Sensordaten 112 aus.

In einem Schritt S30 werden die Sensordaten 112 im Steuergerät 110 ausgewertet, um zu erkennen, ob der Gasgriff 102 normal oder nur eingeschränkt beweglich ist. Es ist möglich, dass die Sensordaten 112 unter Verwendung des Steuersignals 114 ausgewertet werden.

Auf Grundlage der Sensordaten 112 kann beispielsweise das aktuelle Haltemoment ermittelt werden, mit dem der Gasgriff 102 vom Fahrer in seiner aktuellen Position gehalten wird.

In Abhängigkeit vom aktuellen Haltemoment und vom aktuellen Drehwinkel des Gasgriffs 102 kann dann bestimmt werden, ob der Gasgriff 102 normal oder nur eingeschränkt beweglich ist.

Dass der Gasgriff 102 nur eingeschränkt beweglich ist, kann beispielsweise immer dann erkannt werden, wenn das Haltemoment kleiner als ein vorgegebener Haltemomentschwellenwert ist und gleichzeitig der Drehwinkel größer als ein vorgegebener Drehwinkelschwellenwert, etwa größer als null, ist.

Wird die eingeschränkte Beweglichkeit des Gasgriffs 102 erkannt, so kann optional verhindert werden, dass ein aus dem aktuellen Drehwinkel abgeleitetes Fahrerwunschmoment zum Steuern eines Antriebs und/oder einer Bremse des Motorrads 100 verwendet wird. Zu diesem Zweck kann das Fahrerwunschmoment beispielsweise mit einem geeigneten Alternativwert überschrieben werden.

Es ist möglich, dass der Gasgriff 102 durch entsprechendes Ansteuern des Gasgriffaktors 108 durch das Steuergerät 110 in einer oder entgegengesetzten Richtungen verstellt wird.

Beispielsweise kann der Gasgriff 102 im Stillstand des Motorrads 100 abwechselnd in entgegengesetzten Richtungen über seinen gesamten Verstellbereich verstellt werden, um sicherzustellen, dass der Gasgriff 102 funktionsfähig ist, was auch als Stellgliedtest bezeichnet werden kann. Dabei können beide Endanschläge des Gasgriffs 102 angefahren werden. Ein solcher Stellgliedtest kann beispielsweise beim Starten, Abstellen oder vorübergehenden Anhalten des Motorrads 100, etwa an einer Kreuzung, durchgeführt werden.

Zusätzlich zum Gasgriffaktor 108 kann der Gasgriff 102 eine Rückstellfeder umfassen, die bewirkt, dass sich der Gasgriff 102 in seine Ausgangsposition zurückdreht, sobald der Fahrer den Gasgriff 102 loslässt. Diese Rückstellfunktion kann auch durch den Gasgriffaktor 108 selbst umgesetzt sein. In diesem Fall kann die Rückstellfeder entfallen.

Abschließend wird darauf hingewiesen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Erkennen einer eingeschränkten Beweglichkeit eines Gasgriffs (102) für ein Motorrad (100), wobei das Verfahren umfasst:
Erzeugen eines Steuersignals (114) zum Ansteuern eines Gasgriffaktors (108) zum Verstellen des Gasgriffs (102);
Empfangen von durch eine Gasgriffsensorik (106) als Reaktion auf das Ansteuern des Gasgriffaktors (108) erzeugten Sensordaten (112), die eine Auslenkung des Gasgriffs (102) aus einer Ausgangsposition und/oder eine auf den Gasgriff (102) aufgebrachte Kraft anzeigen; und
Erkennen der eingeschränkten Beweglichkeit durch Auswerten der Sensordaten (112).

2. Verfahren nach Anspruch 1,
wobei eine Haltekraft, mit der der Gasgriff (102) von einem Fahrer gehalten wird, aus den Sensordaten (112) bestimmt wird;
wobei die eingeschränkte Beweglichkeit unter Berücksichtigung der Haltekraft erkannt wird.

3. Verfahren nach Anspruch 2,
wobei die eingeschränkte Beweglichkeit dann erkannt wird, wenn die Haltekraft kleiner als ein Schwellenwert ist und der Gasgriff (102) aus der Ausgangsposition ausgelenkt ist.

4. Verfahren nach einem der vorhergehenden Ansprüche,
wobei das Steuersignal (114) erzeugt wird, um den Gasgriff (102) abwechselnd in entgegengesetzten Richtungen zu verstellen.

5. Verfahren nach einem der vorhergehenden Ansprüche,
wobei das Steuersignal (114) während der Fahrt des Motorrads (100) erzeugt wird.

6. Verfahren nach einem der vorhergehenden Ansprüche, ferner umfassend:
Umsetzen der Auslenkung in ein gewünschtes Drehmoment zum Steuern eines Antriebs und/oder einer Bremse des Motorrads (100);
wenn die eingeschränkte Beweglichkeit erkannt wurde: Verwenden eines vorgegebenen Drehmoments statt des gewünschten Drehmoments zum Steuern des Antriebs und/oder der Bremse.

7. Steuergerät (110), umfassend einen Prozessor, der konfiguriert ist, um das Verfahren nach einem der vorhergehenden Ansprüche auszuführen.

8. Motorradsystem (104), umfassend:
einen Gasgriffaktor (108) zum Verstellen eines Gasgriffs (102) für ein Motorrad (100);
eine Gasgriffsensorik (106) zum Messen einer Auslenkung des Gasgriffs (102) aus einer Ausgangsposition und/oder einer auf den Gasgriff (102) aufgebrachten Kraft; und
ein Steuergerät (110) nach Anspruch 7.

9. Computerprogramm, umfassend Befehle, die einen Prozessor bei Ausführung des Computerprogramms durch den Prozessor veranlassen, das Verfahren nach einem der Ansprüche 1 bis 6 auszuführen.

10. Computerlesbares Medium, auf dem das Computerprogramm nach Anspruch 9 gespeichert ist.

## Claims

1. Method for identifying limited movability of a throttle grip (102) for a motorcycle (100), wherein the method comprises:
generating a control signal (114) for activating a throttle grip actuator (108) for adjusting the throttle grip (102);
receiving sensor data (112), which are generated by a throttle grip sensor system (106) in response to the activation of the throttle grip actuator (108) and which indicate a deflection of the throttle grip (102) from a starting position and/or a force applied to the throttle grip (102); and
identifying the limited movability by evaluating the sensor data (112).

2. Method according to Claim 1,
wherein a holding force, by way of which the throttle grip (102) is held by a driver, is determined from the sensor data (112);
wherein the limited movability is identified taking into account the holding force.

3. Method according to Claim 2,
wherein the limited movability is identified when the holding force is less than a threshold value and the throttle grip (102) is deflected from the starting position.

4. Method according to any of the preceding claims,
wherein the control signal (114) is generated in order to alternately adjust the throttle grip (102) in opposite directions.

5. Method according to any of the preceding claims,
wherein the control signal (114) is generated during riding of the motorcycle (100).

6. Method according to any of the preceding claims, further comprising:
converting the deflection into a desired torque for controlling a drive and/or a brake of the motorcycle (100);
if limited movability has been identified: using a specified torque instead of the desired torque to control the drive and/or the brake.

7. Controller (110) comprising a processor, which is configured to execute the method according to any of the preceding claims.

8. Motorcycle system (104), comprising:
a throttle grip actuator (108) for adjusting a throttle grip (102) for a motorcycle (100);
a throttle grip sensor system (106) for measuring a deflection of the throttle grip (102) from a starting position and/or a force applied to the throttle grip (102); and
a controller (110) according to Claim 7.

9. Computer program comprising instructions that, when the computer program is executed by a processor, cause the processor to execute the method according to any of Claims 1 to 6.

10. Computer-readable medium, on which the computer program according to Claim 9 is stored.

## Revendications

1. Procédé de détection d'une mobilité réduite d'une poignée d'accélérateur (102) pour une motocyclette (100), le procédé comprenant :
le fait de générer un signal de commande (114) pour commander un actionneur (108) de poignée d'accélérateur pour déplacer la poignée d'accélérateur (102) ;
le fait de recevoir des données de capteur (112) générées par un capteur (106) de poignée d'accélérateur en réponse à la commande de l'actionneur (108) de poignée d'accélérateur, indiquant un déplacement de la poignée d'accélérateur (102) par rapport à une position initiale et/ou une force appliquée à la poignée d'accélérateur (102) ; et
le fait de détecter la mobilité réduite par évaluation des données de capteur (112).

2. Procédé selon la revendication 1,
dans lequel une force de maintien avec laquelle la poignée d'accélérateur (102) est maintenue par un conducteur est déterminée à partir des données de capteur (112) ;
la mobilité réduite étant détectée en tenant compte de la force de maintien.

3. Procédé selon la revendication 2,
dans lequel la mobilité réduite est détectée lorsque la force de maintien est inférieure à une valeur seuil et que la poignée d'accélérateur (102) est déplacée depuis la position initiale.

4. Procédé selon l'une des revendications précédentes,
dans lequel le signal de commande (114) est généré pour déplacer la poignée d'accélérateur (102) alternativement dans des directions opposées.

5. Procédé selon l'une des revendications précédentes,
dans lequel le signal de commande (114) est généré pendant la conduite de la motocyclette (100).

6. Procédé selon l'une quelconque des revendications précédentes, comprenant en outre :
le fait de convertir le déplacement en un couple souhaité pour commander un entraînement et/ou un frein de la motocyclette (100) ;
lorsque la mobilité réduite est détectée : le fait d'utiliser un couple prédéterminé au lieu du couple souhaité pour commander l'entraînement et/ou le frein.

7. Unité de commande (110) comprenant un processeur configuré pour mettre en œuvre le procédé selon l'une des revendications précédentes.

8. Système (104) pour motocyclette, comprenant :
un actionneur (108) de poignée d'accélérateur pour régler une poignée d'accélérateur (102) pour une motocyclette (100) ;
un capteur (106) de poignée d'accélérateur pour mesurer un déplacement de la poignée d'accélérateur (102) à partir d'une position initiale et/ou une force appliquée à la poignée d'accélérateur (102) ; et
une unité de commande (110) selon la revendication 7.

9. Programme d'ordinateur comprenant des instructions qui, lorsque le programme d'ordinateur est exécuté par le processeur, amènent ce dernier à mettre en œuvre le procédé selon l'une des revendications 1 à 6.

10. Support lisible par ordinateur sur lequel est stocké le programme d'ordinateur selon la revendication 9.
